(19) Europäisches Patentamt
European Patent Office
Office européen des brevets

(11) **EP 2 189 357 B1**

(12) **EUROPEAN PATENT SPECIFICATION**

(45) Date of publication and mention
of the grant of the patent:
**26.01.2011 Bulletin 2011/04**

(51) Int Cl.:
***B62D 5/04*** *(2006.01)* ***B62D 6/00*** *(2006.01)*

(21) Application number: **09173076.2**

(22) Date of filing: **14.10.2009**

(54) **Electric power steering apparatus for vehicles**

Elektrische Servolenkung für Fahrzeuge

Appareil de direction assistée électrique pour véhicules

(84) Designated Contracting States:
**DE FR**

(30) Priority: **21.11.2008 JP 2008297874**

(43) Date of publication of application:
**26.05.2010 Bulletin 2010/21**

(73) Proprietor: **Honda Motor Co., Ltd.**
**Tokyo 107-8556 (JP)**

(72) Inventor: **Tokunaga, Hiroyuki**
**Wako-shi, Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 1 880 921     DE-A1- 19 738 161**
**US-A- 5 904 223**

## Description

BACKGROUND OF THE INVENTION

Field of the Invention:

The present invention relates to an electric power steering apparatus for transmitting the power of an actuator such as an electric motor or the like to the steering system of a vehicle to reduce the burden on the driver of the vehicle in turning the steering wheel of the steering system. A power steering apparatus according to the preamble of claim 1 is disclosed by EP-A-1 880 921.

Description of the Related Art:

Occasionally, a vehicle travels on a road which is characterized by a fluctuating road surface reaction force applied from the road to the tires of the vehicle, such as a partially icy road. When the front wheels (steerable wheels) of the vehicle enter an icy surface area of the road particularly while the vehicle is making a turn, the coefficient of friction between the tires and the road surface suddenly drops. Therefore, the road surface reaction force applied from the road to the tires abruptly falls, throwing the steering holding force and the road surface reaction force out of balance with each other. As a result, the steering angle tends to increase. As long as the coefficient of friction between the tires and the road surface remains low, the behavior of the vehicle does not change greatly because the lateral forces on the front wheels of the vehicle are not greatly changed by the increasing steering angle. However, when the front wheels of the vehicle run out of the icy surface area and the coefficient of friction between the tires and the road surface starts to increase again, the gripping power of the tires is recovered, and the forces generated on the front wheels increase depending on the increasing steering angle. As a consequence, the behavior of the vehicle is disrupted.

There has been proposed a technology for increasing the stability of a vehicle which incorporates an electric power steering apparatus against abrupt changes in forces generated on the front wheels of the vehicle, as disclosed in Japanese Laid-Open Patent Publication No. 11-049000.

According to the technology disclosed in Japanese Laid-Open Patent Publication No. 11-049000, the steering reaction force exerted on the steering wheel of the vehicle, i.e., the resistive force against the steering force, increases as the rate of change of a rack load becomes greater, thereby reducing the adverse effect on the steering force and the steering holding force when the road surface reaction force abruptly changes. Japanese Laid-Open Patent Publication No. 11-049000 discloses a process of determining the rack load (or its estimated value). A rate of change of the rack load can be determined by differentiating the rack load with respect to time. The rack load is determined by the following equation (1):

$$Fr \ = \ Fp \ + \ Fm \qquad\qquad\qquad \cdots(1)$$

where Fr represents the rack load, Fp the rack shaft force from the pinion, and Fm the rack shaft force from the electric motor.

The rack shaft force Fp from the pinion is determined as a value produced by dividing the steering torque Ts by the pitch circle radius rp of the pinion (Fp = Ts/rp). The rack shaft force Fm from the electric motor is determined as a value produced by multiplying the output shaft torque Tm of the electric motor by the output gear ratio N of the electric motor (Fm = N·Tm). The output shaft torque Tm of the electric motor is determined by the following equation (see paragraphs [0020] - [0026] of Japanese Laid-Open Patent Publication No. 11-049000):

$$Tm \ = \ Kt \cdot Im \ - \ Jm \cdot \theta m'' \ - \ Cm \cdot \theta m' \ \pm \ Tf$$

where

Kt: motor torque constant
lm: motor current
Jm: moment of inertia of the rotating portion of the motor (designed value · constant)
$\theta m'$: motor angular velocity
$\theta m''$ : motor angular acceleration (differential value of motor angular velocity $\theta m'$)

Cm: coefficient of viscosity of the motor

Tf: friction torque

The motor angular velocity θm' is determined from the counter-electromotive force of the motor by the following equation:

$$\theta m' = (Vm - Im \cdot Rm)/Km$$

where

Vm: motor voltage (output from the voltage sensor 31)

Rm: motor resistance (designed value · constant)

Km: induction voltage constant of the motor

The motor angular velocity θm' is also determined from the differential value θs' of the steering angle θs which is represented by the output from a steering angle sensor which detects the angular displacement of the steering shaft, by the following equation:

$$\theta m' = (\theta s' - Ts'/Ks)N$$

where

Ks: spring constant of the torque sensor

Ts': differential value of the steering torque Ts Practically, the rack shaft force Fp from the pinion and the rack shaft force Fm from the electric motor may be processed by a phase compensation filter to correct any phase shift between these rack shaft forces Fp, Fm.

The electric power steering apparatus is basically designed such that as the vehicle speed is lower, the amount of assistance given by the electric motor to the steering force (steering torque) generated by the steering wheel, i.e., the motor current that is supplied to the electric motor, is greater.

Specifically, in the electric power steering apparatus, the steering assistive force generated by the electric motor to assist in turning the steering wheel is determined based on the detected value of the steering torque and the vehicle speed. Therefore, while the vehicle is making a steady turn, i.e., while the driver is holding the steering wheel at a given angle, the electric power steering apparatus fails to sufficiently block fluctuations of the steering force on the steering wheel which are caused by so-called steering kickback (strong reaction transmitted to the steering wheel when the vehicle runs on rough road surfaces and so-called torque steer (a torque transmitted to the steering wheel due to the difference between torques produced by the left and right front wheels), based on variations (time-dependent changes) in the rack load caused by rough terrain (irregular road surfaces and road surfaces with steps).

While the vehicle is running straight, furthermore, the steering holding force applied by the driver to the steering wheel may be small or essentially nil, or the driver may not consciously hold the steering wheel. In such a situation, it is expected that the steering wheel angle will be disturbed greatly due to steering kickback and torque steer based on variations in the rack load caused by rough terrain (irregular road surfaces and road surfaces with steps).

SUMMARY OF THE INVENTION

It is an object of the present invention to provide an electric power steering apparatus which is capable of effectively minimizing or blocking fluctuations of the steering force on the steering wheel which result from variations in the rack load caused by rough terrain (irregular road surfaces, etc.) when a vehicle incorporating the electric power steering apparatus travels thereon.

An electric power steering apparatus for a vehicle according to the present invention includes a rack and pinion mechanism for transmitting a steering force from a steering wheel to road wheels of the vehicle, the rack and pinion mechanism including a rack and a pinion, a drive signal generator for generating a drive signal for generating a steering assistive force depending on steering of the steering wheel, an actuator for generating the steering assistive force and transmitting the steering assistive force through the rack of the rack and pinion mechanism to the road wheels in response to the drive signal, a rack load rate-of-change calculator for calculating a rate of change of a load imposed on the rack, and a corrective signal generator for generating a corrective signal for the drive signal in a direction to cancel out the rate of change of the rack load when the rate of change of the rack load calculated by the rack load rate-of-change calculator becomes equal to or greater than a predetermined value in a case where a steering speed of the steering wheel is equal to or smaller than a predetermined speed, and supplying the corrective signal to the actuator.

The steering speed may be determined indirectly by measuring the rotational speed of the actuator, e.g., an electric motor, or the stroke speed of the rack, rather than directly measuring the steering speed of the steering wheel. Therefore, the steering speed covers the steering speed of the steering wheel, the speed of the actuator, and the stroke speed of the rack.

The predetermined value for the rate of change of the load imposed on the rack may be determined in advance based on experimental data or simulated data produced for each vehicle when the vehicle actually runs. Actual vehicles which incorporate the electric power steering apparatus may include a mechanism for making the predetermined value variable.

According to the present invention, while the steering speed of the steering wheel is equal to or smaller than the predetermined speed, i.e., while the vehicle is making a steady turn with the steering wheel being held at a given angle or while the vehicle is running straight, when the rate of change of the rack load calculated by the rack load rate-of-change calculator becomes equal to or greater than the predetermined value, a corrective signal for a drive signal in a direction to cancel out the rate of change of the rack load is generated and added to a drive signal for generating a normal steering assistive force, and the sum signal is supplied to the actuator. Therefore, the electric power steering apparatus is effective to reduce or block fluctuations of the steering force of the steering wheel due to rough terrain (road surface irregularities) on which the vehicle is traveling.

The above and other objects, features, and advantages of the present invention will become more apparent from the following description when taken in conjunction with the accompanying drawings in which preferred embodiments of the present invention are shown by way of illustrative example.

BRIEF DESCRIPTION OF THE DRAWINGS

FIG. 1 is a schematic view, partly in block form, of an electric power steering apparatus according to an embodiment of the present invention;

FIG. 2 is a functional block diagram of a corrective current generator according to a first embodiment of the present invention for the electric power steering apparatus; and

FIG. 3 is a functional block diagram of a corrective current generator according to a second embodiment of the present invention for the electric power steering apparatus.

DESCRIPTION OF THE PREFERRED EMBODIMENTS

Electric power steering apparatuses according to preferred embodiments of the present invention will be described in detail below with reference to the accompanying drawings.

Like or corresponding parts are denoted by like or corresponding reference numerals throughout views.

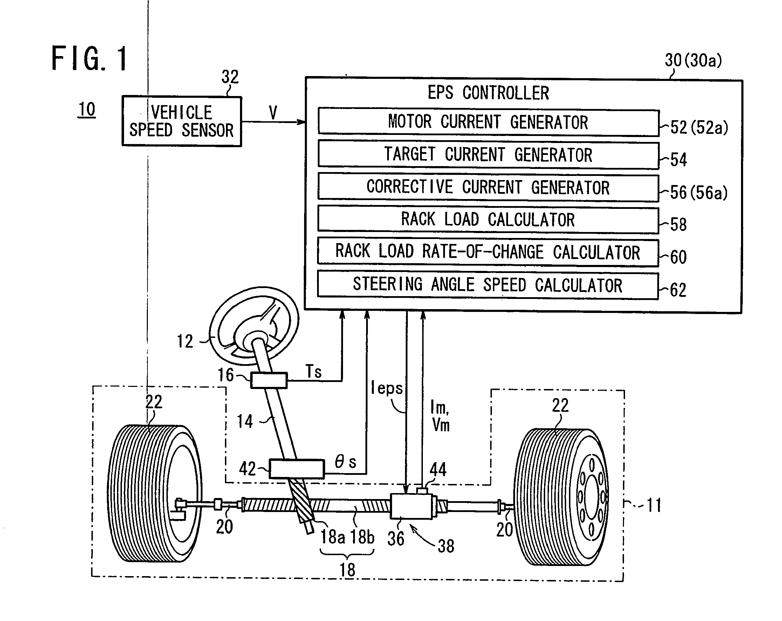

FIG. 1 schematically shows, partly in block form, of an electric power steering apparatus according to the present invention.

As shown in FIG. 1, an electric power steering apparatus 10 according to the present invention is incorporated in a vehicle and has a steering mechanism 11 for steering road wheels 22 (steerable wheels) of the vehicle. The steering mechanism 11 comprises a rack and pinion mechanism 18 including a pinion 18a and a rack 18b, and an assistive rack and pinion mechanism 38 including an EPS (Electric Power Steering) motor 36 which comprises an electric motor.

The driver of the vehicle manually applies a steering force to a steering wheel 12 of the vehicle. The applied steering force is transmitted through a steering shaft 14 to the rack and pinion mechanism 18 of the steering mechanism 11. The steering shaft 14 is associated with a steering torque sensor 16 for detecting a steering torque Ts applied to the steering shaft 14 and a steering angle sensor 42 for detecting a steering angle θs of the steering shaft 14.

When the driver turns the steering wheel 12, the steering shaft 14 rotates the pinion 18a. The rotary motion of the pinion 18a is translated into an axial linear motion of the rack 18b, which causes tie rods 20 to change the direction in which the road wheels 22 (front wheels) run.

To assist in the steering force that is manually applied to the steering wheel 12 by the driver, the steering torque Ts detected by the steering torque sensor 16 is supplied to an EPS controller 30 of the electric power steering apparatus 10.

The EPS controller 30 is also supplied with the steering angle θs from the steering angle sensor 42, a vehicle speed V from a vehicle speed sensor 32, and a motor current Im, a motor voltage Vm, and a motor angular velocity θm' (dθm/dt where θm represents the angular displacement) [rad/s] from a current/voltage/angular velocity sensor 44 which is mounted on the EPS motor 36. Depending on the supplied items of information, the EPS controller 30 determines a motor current Ieps for assisting in the steering force that is manually applied to the steering wheel 12 and supplies the determined motor current Ieps as a drive signal for generating an assistive torque (steering assistive force).

The EPS controller 30 comprises an ECU (Electronic Control Unit) which is a computing machine including a microcomputer. The ECU has a CPU (Central Processing Unit), a ROM (Read Only Memory, including an EEPROM), a RAM (Random Access Memory), input/output devices including an A/D converter and a D/A converter, a timer as a time measuring means, etc. When the CPU reads and executes programs stored in the ROM, it realizes various functions such as a control section, an arithmetic section, a processing section, etc. These functions may also be implemented by corresponding hardware devices. If the functions are hardware-implemented, then the terms "control section", "arithmetic section", "processing section", etc. are replaced with "control circuit", "arithmetic circuit", "processing circuit", etc., or "control unit", "arithmetic unit", "processing unit", etc. or "control device", "arithmetic device", "processing device", etc.

In FIG. 1, the EPS controller 30 functions as a motor current generator 52, a target current generator 54, a corrective current generator 56, a rack load calculator 58, a rack load rate-of-change calculator 60, and a steering angle speed calculator 62.

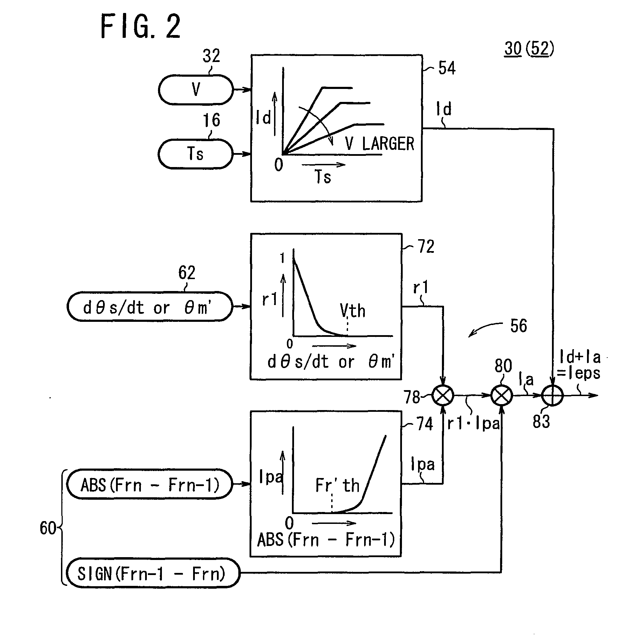

The target current generator 54 has characteristic data (map) 54 shown in FIG. 2, and generates (calculates) a target current Id (corresponding to a target torque for the EPS motor 36) for a steering torque Ts with respect to a vehicle speed V used as a parameter.

The corrective current generator 56 generates a corrective current Ia (to be described later) under a given condition (to be described later). The corrective current Ia and the target current Id (to be described later) are combined into a corrected motor current Ieps (= Id + Ia) and the corrected motor current Ieps is supplied to the EPS motor 36. As described later, the corrective current generator 56 refers to a corrective current generator according to a first embodiment of the present invention, and a corrective current generator 56a refers to a corrective current generator according to a second embodiment of the present invention.

The rack load calculator 58 calculates a rack load Fr according to the equation (1) described above. The equation (1) will be described again below.

$$\mathbf{Fr = Fp + Fm} \qquad\qquad\qquad \cdot\cdot\cdot(1)$$

where

Fr: rack load
Fp: rack shaft force from the pinion 18a
Fp = steering torque (Ts) ÷ the pitch circle radius (rp) of the pinion 18a = Ts/rp
Fm: rack shaft force from the EPS motor 36
Fm = output shaft torque Tm of the EPS motor 36 $\times$ the output gear ratio N of the EPS motor 36 = N·Tm

The rack load rate-of-change calculator 60 calculates a rate of change of the rack load as the difference between a rack load $Fr_{n-1}$ calculated in a preceding sampling cycle and a rack load $Fr_n$ calculated in a present sampling cycle. The rate of change of the rack load is expressed as Fr' = dFr/dt (= $Fr_n$ - $Fr_{n-1}$). The absolute value of the rate Fr' of change of the rack load is represented by ABS($Fr_n$ - $Fr_{n-1}$), and the sign of the direction in which the rack load changes is determined as the difference (positive or negative) between the rack load $Fr_{n-1}$ calculated in the preceding sampling cycle and the rack load $Fr_n$ calculated in the present sampling cycle. Specifically, if the difference ($Fr_{n-1}$ - $Fr_n$) is positive, then the sign is determined as SIGN($Fr_{n-1}$ - $Fr_n$) = + 1, and if the difference ($Fr_{n-1}$ - $Fr_n$) is negative, then the sign is determined as SIGN($Fr_{n-1}$ - $Fr_n$) = - 1.

As shown in FIG. 2, the rack load rate of change calculator 60 shown in FIG. 1 calculates an absolute value ABS($Fr_n$ - $Fr_{n-1}$) of the rate of change of the rack load, and a sign SIGN($Fr_{n-1}$ - $Fr_n$) of the direction (positive or negative) in which the rate Fr' of change of the rack load changes. The sign SIGN($Fr_{n-1}$ - $Fr_n$) of the direction in which the rate Fr' of change of the rack load changes may be replaced with the direction in which the steering torque Ts from the steering torque sensor 16 changes.

The steering angle speed calculator (steering angle rate-of-change calculator) 62 calculates a steering angle speed (a steering speed of the steering wheel 12) dθs/dt = θs' which represents a rate of change of the steering angle θs from the steering angle sensor 42. The steering angle speed dθs/dt can also be calculated using data from a motor rotational speed sensor combined with the EPS motor 36.

A. Description of a first embodiment:

FIG. 2 is a functional block diagram showing the configuration of the EPS controller 30 (the motor current generator 52) including the corrective current generator 56 according to a first embodiment of the present invention.

According to the first embodiment, the EPS controller 30 determines the motor current Ieps as the sum of the target current Id generated by the target current generator 54 and the corrective current Ia generated by the corrective current generator 56.

The target current generator 54 generates (calculates) a target current Id (corresponding to a target torque for the EPS motor 36) for a steering torque Ts with respect to a vehicle speed V used as a parameter, based on the characteristic data that are present in the target current generator 54, as shown in FIG. 2.

The corrective current generator 56 comprises a speed ratio map 72 having such characteristics which are representative of a first ratio (a first corrective coefficient, a first gain) r1 which progressively decreases from a value "1" to a value "0" as the steering angle speed dθs/dt or motor angular velocity θm' [rad/s] calculated by the steering angle speed calculator 62 increases from a value "0" to a predetermined speed (threshold speed) Vth, a rack load rate-of-change corrective current map 74 having such characteristics which are representative of a basic corrective current Ipa which progressively increases as the absolute value ABS(Frn - Frn-1) of the rate of change of the rack load increases beyond a predetermined value (threshold) Fr'th (Fr' refers to the rate of change of a rack load, Fr'th > 0), a multiplier 78 for multiplying the first ratio r1 by the basic corrective current Ipa, and a multiplier 80 for multiplying the product from the multiplier 78 by a positive or negative sign to calculate a corrective current Ia. The corrective current generator 56 calculates a corrective current Ia according to the following equation (2):

$$\texttt{Ia = r1 × Ipa × (1 or -1)} \qquad \cdots (2)$$

According to the first embodiment, basically, as the steering angle speed dθs/dt or motor angular velocity θm' (dθm/dt) [rad/s] is smaller, i.e., as the steering wheel is in a state closer to the state in which it is being held at a given angle by the driver, the first ratio r1 is increased based on the speed ratio map 72. When the rack load Fr increases in the rack load rate of change corrective current map 74 {(Frn-1 - Frn) < 0 → SIGN(Frn-1 - Frn) = - 1}, as the absolute value ABS(Frn - Frn-1) of the rate of change of the rack load increases beyond the predetermined value (threshold) Fr'th (Fr' refers to the rate of change of a rack load, Fr'th > 0), the corrective current generator 56 generates a corrective current Ia {Ia < 0} (Ia = r1·Ipa < 0) in a direction to reduce an increase in the steering force of the steering wheel 12. The adder 83 adds the corrective current Ia (whose value is negative) to the target current Id to generate a motor current Ieps, which is supplied to the EPS motor 36.

When the steering mechanism 11 is thus controlled, torque fluctuations of the steering wheel 12 due to kickback from the road surface can be reduced.

Similarly, as the steering angle speed dθs/dt or motor angular velocity θm' (dθm/dt) is smaller, i.e., as the steering wheel is in a state closer to the state in which it is being held at a given angle by the driver, the first ratio r1 is increased based on the speed ratio map 72. When the rack load Fr decreases in the rack load rate-of-change corrective current map 74 {(Frn-1 - Frn) > 0 → SIGN(Frn-1 - Frn) = 1}, as the absolute value ABS(Frn - Frn-1) of the rate of change of the rack load increases beyond the predetermined value Fr'th, the corrective current generator 56 generates a corrective current Ia {Ia > 0} (Ia = r1·Ipa > 0) in a direction to reduce a decrease in the steering force of the steering wheel 12. The adder 83 adds the corrective current Ia (whose value is positive) to the target current Id to generate a motor current Ieps, which is supplied to the EPS motor 36.

When the steering mechanism 11 is thus controlled, torque fluctuations of the steering wheel 12 due to kickback from the road surface can be reduced.

B. Description of a second embodiment:

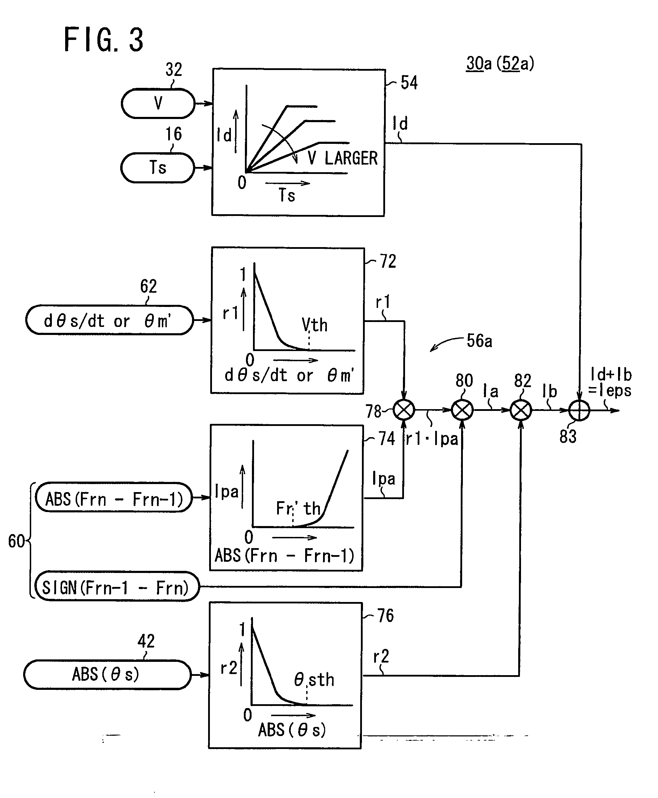

FIG. 3 is a functional block diagram showing the configuration of an EPS controller 30a (motor current generator 52a) including the corrective current generator 56a according to a second embodiment of the present invention.

The corrective current generator 56a according to the second embodiment further includes a steering angle ratio map 76 having such characteristics which are representative of a second ratio (a second corrective coefficient, a second gain) r2 which progressively increases from a value "0" to a value "1" as the absolute value ABS(θs) of the steering angle θs drops from a predetermined value (threshold) θsth, and a multiplier 82 for calculating a corrective current Ib by multiplying the corrective current Ia calculated according to the first embodiment by the second ratio r2, according to the following equation (3):

$$Ib = Ia \times r2 = r1 \times r2 \times Ipa \times (1 \text{ or } -1) \cdots (3)$$

While the vehicle is running straight, i.e., while the driver is applying a small steering holding force or no steering holding force at all, the steering wheel 12 tends to be disturbed greatly due to kickback from the road surface. According to the second embodiment, when the steering angle $\theta s$ is small, i.e., when the absolute value $ABS(\theta s)$ thereof is small, in order to increase a steering reaction force gain for reducing kickback, the second corrective coefficient (second gain) r2 is controlled to approach the value "1" to increase the corrective current Ib as the steering angle $\theta s$ is smaller or the steering wheel 12 is closer to its neutral position. In other words, while the vehicle is running straight, the second corrective coefficient (second gain) r2 which refers to a gain for the corrective signal Ia, is controlled so as to be maximized for thereby reducing torque fluctuations of the steering wheel 12 which tends to be subject to kickback from the road surface while the vehicle is running straight.

C. Brief summary of the invention:

As described above, the electric power steering apparatus 10 according to the present invention includes the rack and pinion mechanism 18 for transmitting the steering force from the steering wheel 12 to the road wheels 22, the motor current generator 52 (52a) which serves as a drive signal generator for generating a motor current Ieps as a drive signal for generating a steering assistive force depending on steering of the steering wheel 12, the EPS motor 36 which serves as an actuator for generating a steering assistive force and transmitting the steering assistive force through the rack 18b to the road wheels 22 in response to the motor current Ieps, the rack load rate-of-change calculator 60 for calculating a rate of change per unit time of the load imposed on the rack 18b {(a rate $Fr'$ (= $Frn$ - $Frn-1$) of change of the rack load}, and the corrective current generator 56 (56a) which serves as a corrective signal generator for generating a corrective current Ia or a corrective current Ib as a corrective signal for the drive signal in a direction to cancel out the rate $Fr'$ of change of the rack load when the rate $Fr'$ of change of the rack load calculated by the rack load rate-of-change calculator 60 becomes equal to or greater than the predetermined value $Fr'th$ in a case where the steering angle speed $\theta s'$ (which may be replaced with the motor angular velocity $\theta m'$ or the rack stroke speed) which refers to the steering speed of the steering wheel 12 is equal to or smaller than the predetermined speed Vth, and adding the corrective current Ia or the corrective current Ib to the target current Id to produce an EPS current Ieps = Id + Ia or Id + Ib and supplying the EPS current Ieps to the EPS motor 36.
As described above, while the steering angle speed $\theta s'$ of the steering wheel 12 is equal to or smaller than the predetermined speed Vth, i.e., while the vehicle is making a steady turn with the steering wheel being held at a given angle or while the vehicle is running straight, when the rate $Fr'$ of change of the rack load calculated by the rack load rate-of-change calculator 60 becomes equal to or greater than the predetermined value $Fr'th$, the EPS motor 36 is supplied with the corrective current Ia or Ib which serves as a corrective signal for the drive signal in a direction to cancel out the rate $Fr'$ of change of the rack load. Accordingly, the steering wheel 12 is prevented from being disturbed due to kickback from the road surface, i.e., the steering force of the steering wheel 12 is prevented from fluctuating.
The predetermined value $Fr'th$ for the rate $Fr'$ of change of the rack load may be predetermined based on experimental data produced for each vehicle when the vehicle actually runs. Actual vehicles which incorporate the electric power steering apparatus 10 may include a mechanism for making the predetermined value $Fr'th$ variable in order to optimize a steering feel which the driver will have during operation of the electric power steering apparatus 10.
The electric power steering apparatus 10 is thus effective to improve the ability to block fluctuations of the rack load from being transmitted to the steering wheel 12 while the vehicle is making a steady turn, and the like.

**Claims**

**1.**   An electric power steering apparatus for a vehicle, comprising:

a rack and pinion mechanism (18) for transmitting a steering force from a steering wheel (12) to road wheels (22) of the vehicle, the rack and pinion mechanism (18) including a rack (18b) and a pinion (18a);
a drive signal generator (52, 52a) for generating a drive signal (Ieps = Id) for generating a steering assistive force depending on steering of the steering wheel (12);
an actuator (36) for generating the steering assistive force and transmitting the steering assistive force through the rack (18b) of the rack and pinion mechanism (18) to the road wheels (22) in response to the drive signal (Ieps = Id), **characterised by**:

a rack load rate-of-change calculator (60) for calculating a rate (Fr') of change of a load (Fr) imposed on the rack (18b); and

a corrective signal generator (56) for generating a corrective signal (Ia) for the drive signal (Ieps = Id) in a direction to cancel out the rate (Fr') of change of the rack load when the rate (Fr') of change of the rack load calculated by the rack load rate-of-change calculator (60) becomes equal to or greater than a predetermined value (Fr'th) in a case where a steering speed (θs') of the steering wheel (12) is equal to or smaller than a predetermined speed (Vth), and supplying the corrective signal (Ia) to the actuator (36).

2. An electric power steering apparatus for a vehicle according to claim 1, wherein the rack load rate-of-change calculator (60) determines the load (Fr) imposed on the rack (18b) as the sum of a rack shaft force (Fp) from the pinion (18a) of the rack and pinion mechanism (18) and a rack shaft force (Fm) from the actuator (36).

3. An electric power steering apparatus for a vehicle according to claim 1 or 2, wherein the corrective signal generator (56) sets a gain (r1) such that the corrective signal (Ia) is greater as the steering speed (θs') of the steering wheel (12) is smaller.

4. An electric power steering apparatus for a vehicle according to claim 1 or 2, wherein the corrective signal generator (56) sets a gain (r2) for the corrective signal to a maximum level while the vehicle is running straight.

5. An electric power steering apparatus for a vehicle according to any one of claims 1 to 4, wherein the actuator comprises an electric motor (36).

## Patentansprüche

1. Elektrische Servolenkvorrichtung für ein Fahrzeug, umfassend:

einen Zahnstangen- und Ritzelmechanismus (18) zum Übertragen einer Lenkkraft von einem Lenkrad (12) auf Straßenräder (22) des Fahrzeugs, wobei der Zahnstangen- und Ritzelmechanismus (18) eine Zahnstange (18b) und ein Ritzel (18a) enthält;

einen Treibersignalgenerator (52, 52a) zum Erzeugen eines Treibersignals (Ieps = Id) zum Erzeugen einer Lenkunterstützungskraft in Abhängigkeit vom Lenken des Lenkrads (12);

einen Aktuator (36) zum Erzeugen der Lenkunterstützungskraft und Übertragen der Lenkunterstützungskraft durch die Zahnstange (18b) des Zahnstangen- und Ritzelmechanismus (18) auf die Straßenräder (22) in Antwort auf das Treibersignal (Ieps = Id), **gekennzeichnet durch**:

einen Zahnstangenlaständerungsratenrechner (60) zum Berechnen einer Änderungsrate (Fr') einer auf die Zahnstange (18b) wirkenden Last (Fr); und

einen Korrektursignalgenerator (56) zum Erzeugen eines Korrektursignals (Ia) für das Treibersignal (Ieps = Id) in einer Richtung zum Aufheben der Änderungsrate (Fr') der Zahnstangenlast, wenn die vom Zahnstangenlaständerungsratenrechner (60) berechnete Änderungsrate (Fr') der Zahnstangenlast gleich oder größer als ein vorbestimmter Wert (Fr'th) wird, in einem Fall, wo eine Lenkgeschwindigkeit (θs') des Lenkrads (12) gleich oder kleiner als eine vorbestimmte Geschwindigkeit (Vth) ist, und Zuführen des Korrektursignals (Ia) zu dem Aktuator (36).

2. Elektrische Servolenkvorrichtung für ein Fahrzeug nach Anspruch 1, worin der Zahnstangenlaständerungsratenrechner (60) die auf die Zahnstange (18b) einwirkende Last (Fr) als die Summe einer Zahnstangenkraft (Fp) von dem Ritzel (18) des Zahnstangen- und Ritzelmechanismus (18) und einer Zahnstangenkraft (Fm) von dem Aktuator (36) bestimmt.

3. Elektrische Servolenkvorrichtung für ein Fahrzeug nach Anspruch 1 oder 2, worin der Korrektursignalgenerator (56) eine Verstärkung (r1) derart setzt, dass das Korrektursignal (Ia) größer wird, wenn die Lenkgeschwindigkeit (θs') des Lenkrads (12) kleiner wird.

4. Elektrische Servolenkvorrichtung für ein Fahrzeug nach Anspruch 1 oder 2, worin der Korrektursignalgenerator (56) eine Verstärkung (r2) für das Korrektursignal auf einen maximalen Pegel setzt, während das Fahrzeug geradeaus fährt.

**5.** Elektrische Servolenkvorrichtung für ein Fahrzeug nach einem der Ansprüche 1 bis 4, worin der Aktuator einen Elektromotor (36) aufweist.

## Revendications

**1.** Dispositif de direction à assistance électrique pour un véhicule, comprenant :

un mécanisme à pignon et crémaillère (18) pour transmettre une force de braquage d'un volant (12) à des roues (22) du véhicule, le mécanisme à pignon et crémaillère (18) comprenant une crémaillère (18b) et un pignon (18a);
un générateur de signal de commande (52, 52a) pour générer un signal de commande (Ieps = Id) pour générer une force d'assistance au braquage en fonction du braquage du volant (12) ;
un actionneur (36) pour générer la force d'assistance au braquage et transmettre la force d'assistance au braquage par l'intermédiaire de la crémaillère (18b) du mécanisme à pignon et crémaillère (18) aux roues (22) en réponse au signal de commande (Ieps = Id), **caractérisé par** :

un calculateur de taux de variation de charge de crémaillère (60) pour calculer un taux (Fr') de variation d'une charge (Fr) imposée à la crémaillère (18b) ; et
un générateur de signal de correction (56) pour générer un signal de correction (Ia) pour le signal de commande (Ieps = Id) dans une direction pour annuler le taux (Fr') de variation de la charge de crémaillère lorsque le taux (Fr') de variation de la charge de crémaillère calculé par le calculateur de taux de variation de charge de crémaillère (60) devient égal ou supérieur à une valeur prédéterminée (Fr'th) dans un cas où une vitesse de braquage (θs') du volant (12) est égale ou inférieure à une vitesse prédéterminée (Vth), et fournir le signal de correction (Ia) à l'actionneur (36).

**2.** Dispositif de direction à assistance électrique pour un véhicule selon la revendication 1, dans lequel le calculateur de taux de variation de charge de crémaillère (60) détermine la charge (Fr) imposée à la crémaillère (18b) en tant que somme d'une force d'arbre de crémaillère (Fp) provenant du pignon (18a) du mécanisme à pignon et crémaillère (18) et d'une force d'arbre de crémaillère (Fm) provenant de l'actionneur (36).

**3.** Dispositif de direction à assistance électrique pour un véhicule selon la revendication 1 ou 2, dans lequel le générateur de signal de correction (56) fixe un gain (r1) de sorte que le signal de correction (Ia) augmente alors que la vitesse de braquage (θs') du volant (12) diminue.

**4.** Dispositif de direction à assistance électrique pour un véhicule selon la revendication 1 ou 2, dans lequel le générateur de signal de correction (56) fixe un gain (r2) pour le signal de correction à un niveau maximum alors que le véhicule se déplace tout droit.

**5.** Dispositif de direction à assistance électrique pour un véhicule selon l'une quelconque des revendications 1 à 4, dans lequel l'actionneur comprend un moteur électrique (36).

FIG. 1

VEHICLE SPEED SENSOR ~32

10

V

EPS CONTROLLER                                    30(30a)

MOTOR CURRENT GENERATOR          ~52(52a)

TARGET CURRENT GENERATOR          ~54

CORRECTIVE CURRENT GENERATOR     ~56(56a)

RACK LOAD CALCULATOR              ~58

RACK LOAD RATE-OF-CHANGE CALCULATOR ~60

STEERING ANGLE SPEED CALCULATOR   ~62

12

16

Ts

Ieps

Im, Vm

14

θs

42

44

22

22

20

18a 18b

36

38

20

11

18

10

EP 2 189 357 B1

# FIG. 2

# FIG. 3

**EP 2 189 357 B1**

REFERENCES CITED IN THE DESCRIPTION

**Patent documents cited in the description**

- EP 1880921 A

- JP 11049000 A